# EUROPEAN PATENT APPLICATION

(11) **EP 3 050 752 A1**
(43) Date of publication of application: **03.08.2016**
(21) Application number: 15152972.4
(22) Date of filing: 29.01.2015
(51) Int. Cl.: B60R 1/00, B62J 29/00, B62J 99/00, G02B 27/01

(54) **Motorcycle rear view cameras**

(71) Applicant: Application Solutions (Electronics and Vision) Ltd., Lewes Sussex BN7 2AQ (GB)
(72) Inventor: Flanagan, Paul, Brighton, BN1 7FL (GB); Lawson, Clifford, Finchingfield, CM7 4JU (GB); Powell, John, Hailsham, BN27 3GE (GB); Wingfield, Greg, Horsham, RH13 5JY (GB)
(74) Representative: Büchner, Jörg

(57) **Abstract**

The application provides a camera display system for a two-wheeled vehicle. The camera display system includes two or more cameras, a display unit, and a control unit. The control unit is connected to the cameras via a first signal connection and is connected to the display unit via a first signal connection. In use, each camera provides a camera video signal. The control unit is provided for stitching the camera images of the camera video signals to form a stream of composite images. The display unit is provided for showing the stream of composite images.

## Description

The present application relates to a camera display device for a motorcycle.

GB2446724A provides a road traffic monitoring system. The system includes at least one camera being installed on a cycle or on its rider, a data storage unit for recording images of the at least one camera, and a transfer unit to send the images so these image can be viewed by a third party observer.

The cycle refers to a motorcycle or a bicycle. An example of the data storage unit is a hard disk recorder. An example of the transfer unit is a radio or mobile telephone. The camera can refer to a video recording device.

Preferably, the multiple cameras are used, wherein the cameras faces different directions, some being installed on the cycle, and some being installed on a helmet of a rider of the cycle. Microphones may be provided to record surrounding sounds, to record comments of the rider, or to record both. GPS tracking and telemetric recording may be used to monitor location, speed, as well as other parameters of the cycle. The rider may be provided with a button or a lever to bookmark certain events on the data being stored. Preferably, the rider cannot access the data being stored to prevent tampering of the data.

It is an object of this application to provide an improved camera display device for a two-wheeled vehicle.

The vehicle can have two or three wheels.

The application provides a camera display system for a two-wheeled vehicle.

Examples of the two-wheeled vehicle include a motorcycle, an electric bike, a pushbike, and a bike with an internal combustion engine. In a general sense, the vehicle can have two or three wheels.

The camera display system comprises two or more cameras, a display unit with a screen, and control unit.

In particular, the camera acts to record or capture a stream of digital camera images. Each camera image relates to a front view of the camera. The camera then generates a camera video signal with the stream of digital camera images for transmitting to another device.

In use, the cameras are intended for directing to a rear view of a vehicle. The cameras are positioned such that each camera captures an image of a part of the rear view. Another device can later combine these images to form a composite image that shows a wide and essentially complete the vehicle rear view.

In a general sense, the cameras can capture different stream of images of parts of the vehicle rear view. Another device can later combine corresponding images of the different streams to form a stream of composite images of the vehicle rear view.

The control unit is connected to the cameras via a first signal connection and is connected to the display unit via a second signal connection.

The first signal connection is provided for transmitting the different camera video signals from the various cameras to the control unit.

The control unit later receives these camera video signals. The control unit then combines or unites the corresponding camera images of the camera video signals to form a stream of composite images. The combining is also called stitching. Each composite image is generated from corresponding camera images of the various cameras. The composite image often includes regions of the corresponding camera images or the entire corresponding camera images to form the camera front view. The control unit afterward generates an output video signal with the above stream of composite images for transmitting to a further device.

The second signal connection acts to transmit the output video signal from the control unit to the display unit.

The screen of the display unit acts to display or show the composite images of the output video signal to a user.

This camera display system provides an advantage in that the camera display system uses two or more cameras to capture a certain wide view. This is different using one camera with a wide-angle lens to capture the same view. Most wide-angle lens produces images with distortion. Wide-angle lens that produces images without distortion requires a high precision production process and are expensive. The camera display system does not suffer from these deficiencies.

Different implementations of the camera display system are possible.

In one implementation, the first signal connection is provided by a wireless means. The wireless means can include a Blue-tooth data communication module or a Wifi communication module.

In another implementation, the first signal connection is provided by a wired means, such as electrical cables.

In a further implementation, the second signal connection is provided by a wireless means.

In another implementation, the second signal connection is provided by a wired means.

The camera can include a self-levelling module to keep the camera level with respect the ground. The self-levelling module can also keep the camera inclined at a predetermined angle with respect to the ground.

The application provides a two-wheeled vehicle with the above camera display system. The camera display system shows rear views of the two-wheeled vehicle to a rider of the vehicle.

Two cameras of the camera display system are attached to a rear portion of the two-wheeled vehicle. The rear portion is located behind a rider of the two-wheeled vehicle. A display unit of the camera display system is attached to an front portion of the two-wheeled vehicle. The front portion is located in front of the said rider.

The camera display system provides a rear view of the vehicle, which is different from rear view mirrors that are installed on opposite ends of a handlebar of the vehicle.

The camera display system provides a complete rear view of the vehicle to the rider while the rider moving from his riding position, wherein the rider is essentially looking forward. This is different from the rear-view mirrors, which often have blind spots. The blind spots refer to areas of the rear, which are not shown the mirrors. Such blind spots are not present in the camera display system.

Moreover, the camera display system provides a consistent rear view of the vehicle. The rear-view mirrors do not show a different rear view of the vehicle during cornering. During cornering, the handlebar is rotated and thus causes the rear view mirrors to show a different view.

The camera display system requires the rider to glance slightly downward to see the rear view. In contrast, the rear-view mirrors require the rider to rotate his head from side to side to view these mirrors, which are placed on end parts of the handlebar. Such rotating can affect the balance of the rider, especially when the rider is going around corners.

The camera display system essentially does not affect aerodynamic drag of the two-wheeled vehicle. The rear-view mirrors often do affect the aerodynamic drag since they which stick out to provide a good rear view of the vehicle.

In one aspect of the application, the display unit is attached to an instrument cluster of the two-wheeled vehicle.

The cameras can be attached to the two-wheeled vehicle with an anti-vibration mounting. In use, the two-wheeled vehicle often vibrates. These vibrations are then transmitted from the two-wheeled vehicle to the cameras. Such vibrations act to distort images generated by the cameras. The anti-vibration mounting serves to dampen or reduces these vibrations.

The application also provides a helmet with the above camera display system. The helmet serves a hat that riders, wear to protect their heads. Two or more cameras of the camera display system are attached to the protection helmet for capturing a rear view of the helmet. The cameras can be attached to a rear portion or to a top portion of the helmet. A display unit of the camera display system is attached to the protection helmet such that a wearer of the protection helmet can view or see the display unit.

The cameras can be attached to the helmet with an anti-vibration mounting to prevent the cameras from vibrating. In use, a rider of a motorcycle can wear the helmet. The motorcycle often produces vibrations, which are transmitted to the rider, to the helmet and to the cameras. The anti-vibration mounting acts to dampen or reduce the transmission of vibrations to the cameras.

The application provides a combination of a two-wheeled vehicle and a helmet with the above camera display system. Two or more cameras of the camera display system are attached to a rear portion of the two-wheeled vehicle for capturing a rear view of the two-wheeled vehicle. The rear portion is located behind a rider of the two-wheeled vehicle. A display unit of the camera display system is attached to the helmet for viewing the rear view of the two-wheeled vehicle by a wearer of the helmet.

The cameras can be attached to the two-wheeled vehicle with an anti-vibration mounting.

The application provides another combination of a two-wheeled vehicle and a helmet combination with the above camera display system. At least two cameras of the camera display system are attached to the helmet for capturing a rear view of the two-wheeled vehicle. The cameras can be attached to a rear or a top portion of the helmet. A display unit of the camera display system is attached to a front portion of the two-wheeled vehicle for displaying the rear view of the two-wheeled vehicle to a rider of the two-wheeled vehicle. The front portion is located in front of the rider of the two-wheeled vehicle.

The display unit is often attached to an instrument cluster of the two-wheeled vehicle.

The cameras can be attached to the helmet with an anti-vibration mounting.

In short, the application provides a rear-view display module for a two-wheeled vehicle. Examples of the two-wheeled vehicle include a bicycle and a motorcycle.

The rear-view display module includes two or more cameras, a screen display, and a control unit for stitching together images of the cameras and for sending the stitched images to the screen display.

Several implementations of the rear-view display module are possible.

In one implementation, the cameras are adapted for attaching to a helmet for a rider of the two-wheeled vehicle.

In another implementation, the cameras are adapted for attaching on a part of the two-wheeled vehicle, such as a middle portion of a handlebar of the two-wheeled vehicle.

The cameras can be fixed to the handlebar using anti-vibration mountings. The cameras can also include self-levelling modules for keeping the cameras level with respect to the road.

In a further implementation, the screen display is adapted for serving as a part of an instrument cluster of the two-wheeled vehicle.

In another implementation, the screen display is adapted for attaching to the helmet of the rider of the two-wheeled vehicle.
- Fig. 1: illustrates a motorcycle being equipped with a rear-view camera display device,
- Fig. 2: illustrates an image of a camera of the rear-view camera display device of Fig. 1,
- Fig. 3: illustrates an image of another camera of the rear-view camera display device of Fig. 1,
- Fig. 4: illustrates a stitched image of the rear-view camera display device of Fig. 1,
- Fig. 5: illustrates a protection helmet being equipped with another rear-view camera display device,
- Fig. 6: illustrates a motorcycle and protection helmet being equipped with a further rear-view camera display device,
- Fig. 7: illustrates a motorcycle and protection helmet being equipped with a another rear-view camera display device,
- Fig. 8: illustrates a variant of the rear-view camera display device of Fig. 6, and
- Fig. 9: illustrates a variant of the rear-view camera display device of Fig. 7.

In the following description, details are provided to describe embodiments of the application. It shall be apparent to one skilled in the art, however, that the embodiments may be practiced without such details.

Some parts of the embodiment have similar parts. The similar parts may have the same names or similar part numbers. The description of one similar part also applies by reference to another similar parts, where appropriate, thereby reducing repetition of text without limiting the disclosure.

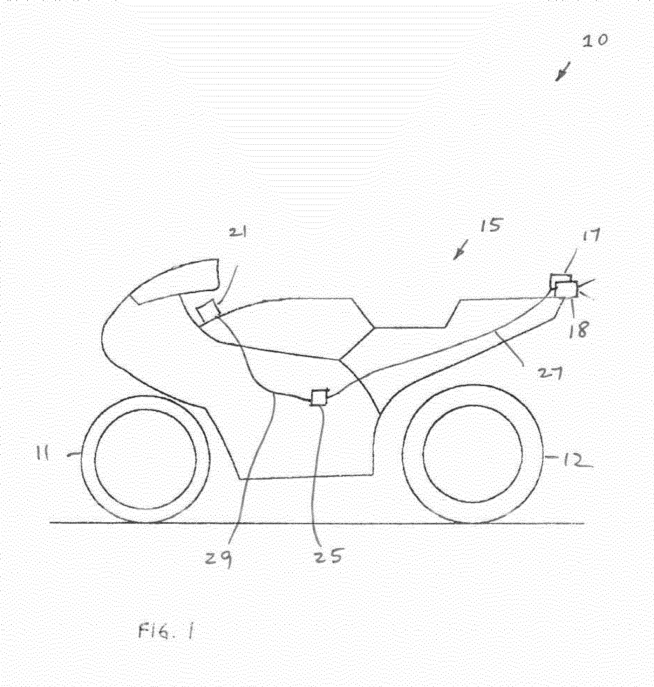

Fig. 1 shows a motorcycle 10, which is equipped with a rear-view camera display device 15.

The motorcycle 10 has two wheels 11 and 12.

The rear-view camera display device 15 includes two cameras that comprises a first camera 17 and a second camera 18, a display screen 21, and an image stitching control unit 25.

In particular, the control unit 25 is connected to the display screen 21 via electrically conductive wires 29 and is also connected to the first and second cameras 17 and 18 via electrically conductive wires 27.

The first and second cameras 17 and 18 are attached to a rear part of the motorcycle 10 and they are directed or positioned for capturing and recording images of the rear view of the motorcycle 10. They are positioned such that only small regions of the images overlap or that the images can be joined to form a single continuous image.

The display screen 21 is attached to a front part of the motorcycle 10, wherein the display screen 21 forms a part to an instrument cluster of the motorcycle 10. The instrument cluster includes a speedometer, an odometer, and a fuel gauge.

In a general sense, the motorcycle 10 can have two or three wheels.

In use, the motorcycle 10 is used for transporting a rider to a destination.

The rear-view camera display device 15 provides the rider with a rear view of the motorcycle 10.

The first and second cameras 17 and 18 are used for capturing videos of the motorcycle rear view, wherein each video comprises a stream of digital images.

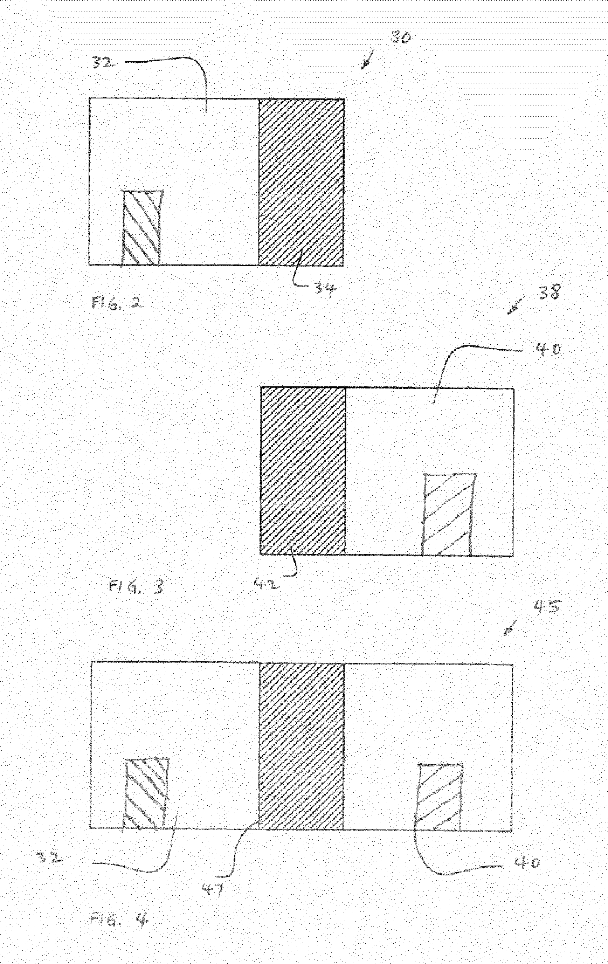

Figs 2 and 3 show images of the videos of the cameras 17 and 18.

In particular, Fig. 2 depicts a first image 30 from the first camera 17. The first image 30 includes a main image region 32 and a small edge image region 34.

Fig. 3 depicts a second image 38 from the second camera 18. The second image 38 includes a main image region 40 and a small image edge region 42.

The conductive wires 27 are used for transmitting these images 30 and 38 to the control unit 25.

The control unit 25 acts to receive these images from the cameras 17 and 18 and to stitch or join these images to form one single image.

Fig. 4 shows a stitched image 45 that formed from the images 30 and 38. The image 45 comprises the main image region 32 of the first image 30 and the main image region 40 of the second image 38. The image 45 also includes an overlap image region 47.

In a general sense, the stitched image 45 does not need to include the overlap image region 47. The first and second cameras 17 and 18 can be directed or be positioned such that the overlap image region 47 is small or that the overlap image region 47 does not exist.

The control unit 25 also serves to send the stitched image 45 to the display screen 21 via the conductive wires 29.

The display screen 21 acts to show the stitched image 45.

The rear-view camera display device 15 provides advantages.

The two cameras 17 and 18 provide a wide rear view of the motorcycle, practically without any distortion and at a low cost. One camera with a wide-angle lens can be used to provide the rear view. This rear view often has distortion because a wide-angle lens that provides little distortion requires high precision and is usually expensive. The two cameras 17 and 18 do not have these disadvantages.

Moreover, the rider just needs to glance slightly downward at the display screen 21 to view the rear. This is different from the rider rotating his head from side to side for looking at rear mirrors, which are attached to a handlebar of the motorcycle 10.

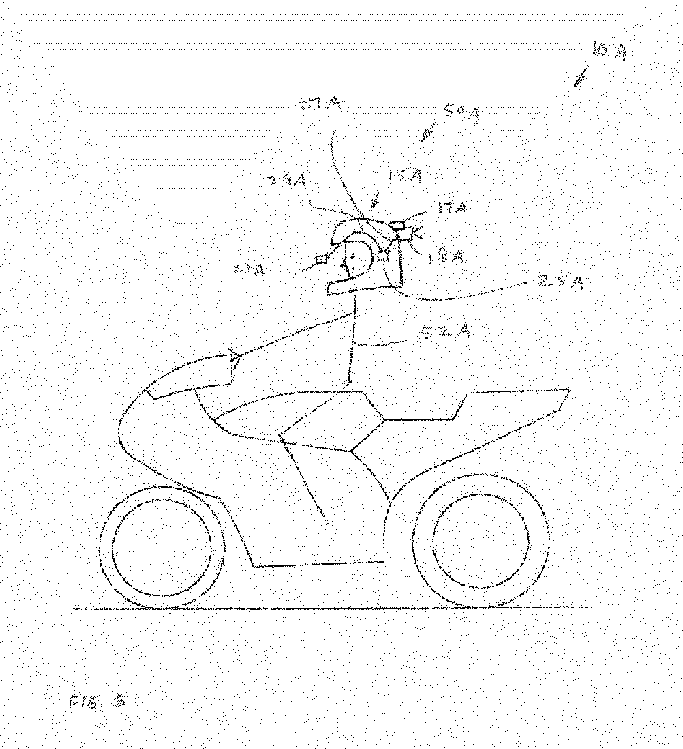

Fig. 5 shows a protection helmet 50A being equipped with another rear-view camera display device 15A. A rider 52A is wearing the protection helmet 50A and is riding a motorcycle 10A.

The rear-view camera display device 15A comprises a first camera 17A with a second camera 18A, a display screen 21A, and an image stitching control unit 25A. The control unit 25A is connected to the display screen 21A via electrically conductive wires 29A, and to the first and second cameras 17A and 18A via electrically conductive wires 27A.

The first and second cameras 17A and 18A are attached to a rear part of the protection helmet 50A and they are directed and positioned for capturing or recording images of the rear view of the motorcycle 10A.

The display screen 21A is attached to the protection helmet 50A and it is positioned for being viewed by the rider 52A, when the rider 52A is looking forward.

In use, the display screen 21A acts as a Head-Up Display (HUD) that shows images without requiring its user to look away from his usual view. This allows the user to look forward while viewing images of the head-up display. In other words, the users do not need to look downward or sideways to view these images.

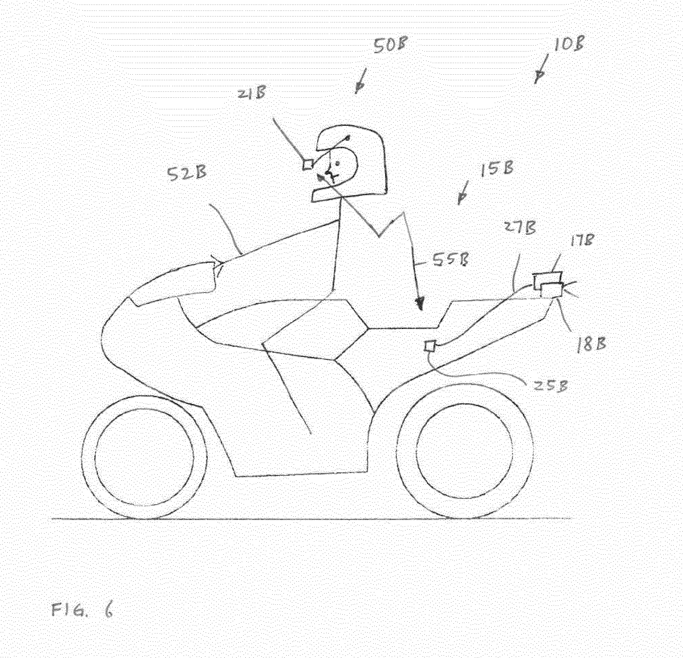

Fig. 6 shows a motorcycle 10B and a protection helmet 50B being equipped with a further rear-view camera display device 15B. A rider 52B is wearing the protection helmet 50B while traveling on the motorcycle 10B.

The rear-view camera display device 15B has a first camera 17B with a second camera 18B, a display screen 21B, and an image stitching control unit 25B.

Specifically, the control unit 25B is connected to the display screen 21B via a wireless channel 55B. The control unit 25B is also connected to the first and second cameras 17B and 18B via electrically conductive wires 27B.

The cameras 17B and 18B are attached to a rear part of the motorcycle 10B. They are directed for recording images of the rear view of the motorcycle 10B.

The display screen 21B is attached to the protection helmet 50B and it is positioned for being viewed by the rider 52B.

In use, the wireless channel 55B provides a means for exchanging data between the display screen 21B and the control unit 25B.

The wireless channel 55B provides an advantage in that it does not physically linked the helmet 50B to the motorcycle 10B, thus allowing ease of movement for the rider 52B.

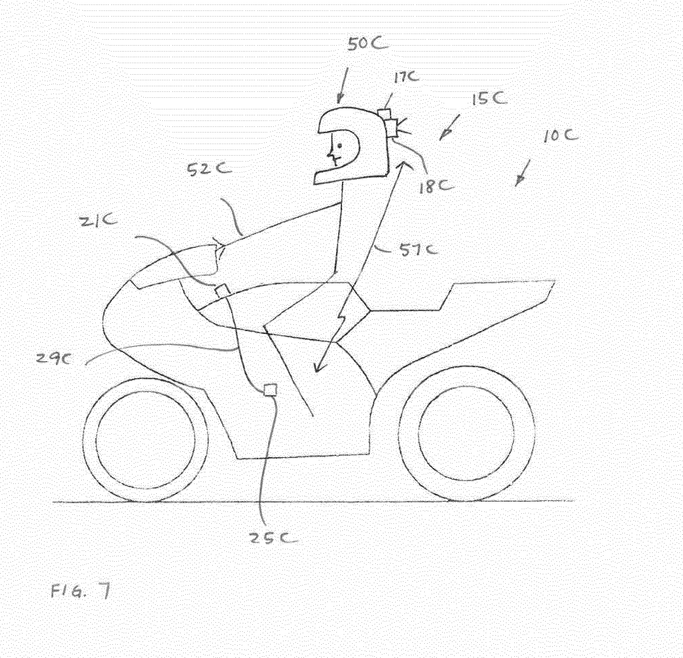

Fig. 7 shows a motorcycle 10C and a protection helmet 50C being equipped with another rear-view camera display device 15C. A rider 52C is wearing the protection helmet 50C while traveling on the motorcycle 10C.

The rear-view camera display device 15C has a first camera 17C with a second camera 18C, a display screen 21C, and an image stitching control unit 25C.

In particular, the control unit 25C is connected to the display screen 21C via electrically conductive wires 29C. The control unit 25C is also connected to the first and second cameras 17C and 18C via a wireless channel 57C.

The cameras 17C and 18C are attached to a rear part of the rear-view camera display device 15C. They are directed for recording images of the rear view of the motorcycle 10C.

The display screen 21C is attached to a front part of the motorcycle 10C.

In use, the wireless channel 57C provides a means for exchanging data between the cameras 17C and 18C and the control unit 25C.

This provides a benefit in that the wireless channel 57C does not physically linked the helmet 50C to the motorcycle 10C, thus providing ease of movement for the rider 52C.

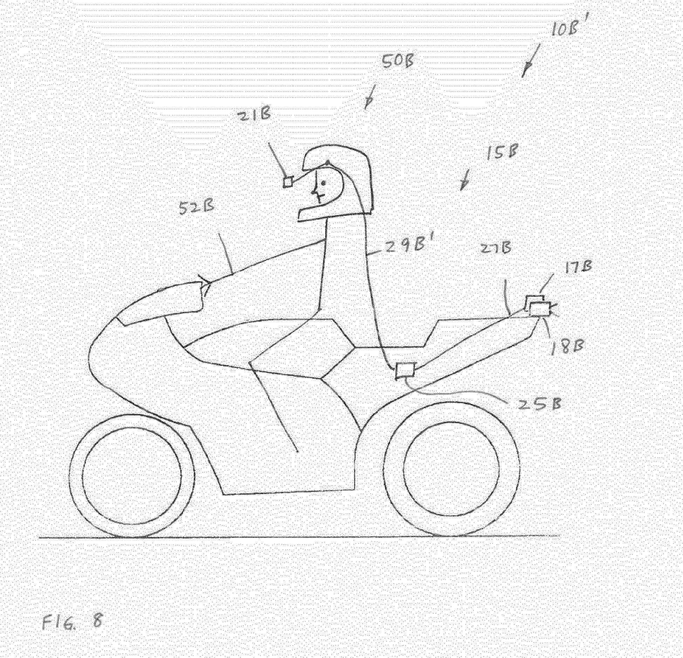

Fig. 8 shows a variant of the rear-view camera display device 10B of Fig. 6. Fig. 8 shows a rear-view camera display device 10B'. The rear-view camera display device 10B' and the rear-view camera display device 10B of Fig. 6 have similar parts.

The rear-view camera display device 10B' includes a display screen 21B and an image stitching control unit 25B, wherein electrically conductive wires 29B' connects the display screen 21B to the image stitching control unit 25B.

The electrically conductive wires 29B' includes a pin and plug connection that allows for easy disconnection of the electrically conductive wires 29B' from the display screen 21B.

The electrically conductive wires 29B' provides a low cost connection between the display screen 21B and the image stitching control unit 25B, which is easy to design.

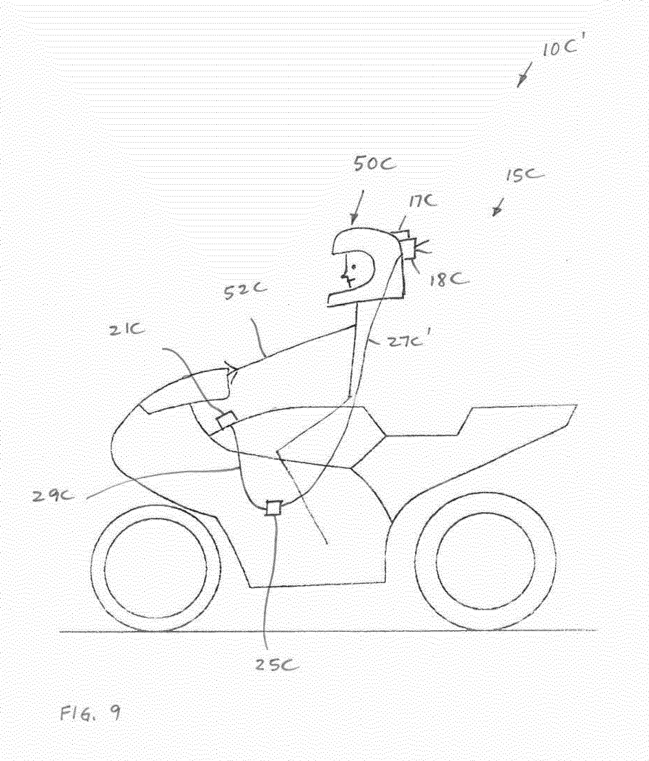

Fig. 9 shows a variant of the rear-view camera display device 10C of Fig. 7. Fig. 9 shows a rear-view camera display device 10C'.The rear-view camera display device 10C' and the rear-view camera display device 10C of Fig. 7 have similar parts.

The rear-view camera display device 10C' includes cameras 17C and 18C as well as an image stitching control unit 25C, wherein electrically conductive wires 27C' connects the cameras 17C and 18C to the image stitching control unit 25C.

The electrically conductive wires 27C' comprises a pin and plug connection that allows for easy disconnection of the electrically conductive wires 27C' from the cameras 17C and 18C.

The electrically conductive wires 27C' provides a low cost connection between the cameras 17C and 18C and the image stitching control unit 25C, which is easy to design.

Although the above description contains much specificity, this should not be construed as limiting the scope of the embodiments but merely providing illustration of the foreseeable embodiments. The above stated advantages of the embodiments should not be construed especially as limiting the scope of the embodiments but merely to explain possible achievements if the described embodiments are put into practice. Thus, the scope of the embodiments should be determined by the claims and their equivalents, rather than by the examples given.

### REFERENCE NUMBERS

- 10: motorcycle
- 11: wheel
- 12: wheel
- 15: rear-view camera display device
- 17: first camera
- 18: second camera
- 21: display screen
- 25: image stitching control unit
- 29: electrically conductive wires
- 27: electrically conductive wires
- 30: first image
- 32: main image region
- 34: edge image region
- 38: second image
- 40: main image region
- 42: image edge region
- 45: stitched image
- 47: overlap image region

- 15A: rear-view camera display device
- 17A: first camera
- 18A: second camera
- 21A: display screen
- 25A: image stitching control unit
- 29A: electrically conductive wires
- 27A: electrically conductive wires
- 50A: helmet
- 52A: rider

- 10B: motorcycle
- 15B: rear-view camera display device
- 17B: first camera
- 18B: second camera

- 21B: display screen
- 25B: image stitching control unit
- 27B: electrically conductive wires
- 50B: protection helmet
- 52B: rider
- 55B: wireless channel

- 10C: motorcycle
- 15C: rear-view camera display device
- 17C: first camera
- 18C: second camera
- 21C: display screen
- 25C: image stitching control unit
- 29C: electrically conductive wires
- 50C: protection helmet
- 52C: rider
- 57C: wireless channel

- 10B': rear-view camera display device
- 29B': electrically conductive wires

- 10C': rear-view camera display device
- 27C': electrically conductive wires

## Claims

1. A camera display system for a two-wheeled vehicle, the camera display system comprising
at least two cameras, each camera providing a camera video signal with a stream of camera images,
a display unit with a screen, and
a control unit being connected to the at least two cameras via a first signal connection and being connected to the display unit via a second signal connection,
the first signal connection is provided for transmitting the camera video signals from the cameras to the control unit and the second signal connection is provided for transmitting an output video signal from the control unit to the display unit,
wherein
the control unit is provided for combining the camera images of the camera video signals to form the output video signal with a stream of composite images.

2. The camera display system according to claim 1, wherein the first signal connection is provided by a wireless means.

3. The camera display system according to claim 1, wherein the first signal connection is provided by a wired means.

4. The camera display system according to one of the above-mentioned claims, wherein
the second signal connection is provided by a wireless means.

5. The camera display system according to one of claims 1 to 3, wherein
the second signal connection is provided by a wired means.

6. The camera display system according to one of the above-mentioned claims, wherein
the camera comprises a self-levelling module.

7. A two-wheeled vehicle with a camera display system according to one of claims 1 to 6,
wherein
- at least two cameras of the camera display system are attached to a rear portion of the two-wheeled vehicle and
- a display unit of the camera display system is attached to a front portion of the two-wheeled vehicle.

8. The two-wheeled vehicle according to claim 7, wherein the display unit is attached to an instrument cluster of the two-wheeled vehicle.

9. The two-wheeled vehicle according to claim 7 or 8,
wherein
the cameras are attached to the two-wheeled vehicle with an anti-vibration mounting.

10. A helmet with a camera display system according to one of claims 1 to 6, wherein
- at least two cameras of the camera display system are attached to the helmet and
- a display unit of the camera display system is attached to the helmet for viewing by a wearer of the helmet.

11. The helmet according to claim 10, wherein
the cameras are attached to the helmet with an anti-vibration mounting.

12. A combination of a two-wheeled vehicle and a helmet with a camera display system according to one of claims 1 to 6, wherein
- at least two cameras of the camera display system are attached to a rear portion of the two-wheeled vehicle and
- a display unit of the camera display system is attached to the helmet for viewing by a wearer of the helmet.

13. The combination according to claim 12, wherein
the cameras are attached to the two-wheeled vehicle with an anti-vibration mounting.

14. A combination of a two-wheeled vehicle and a helmet with a camera display system according to one of claims 1 to 6, wherein
- at least two cameras of the camera display system are attached to the helmet and
- a display unit of the camera display system is attached to a front portion of the two-wheeled vehicle.

15. The combination according to claim 14, wherein
the display unit is attached to an instrument cluster of the two-wheeled vehicle.

16. The combination according to claim 14 or 15, wherein
the cameras are attached to the helmet with an anti-vibration mounting.
